## Europäisches Patentamt

## European Patent Office

## Office européen des brevets

(19)

(11) Veröffentlichungsnummer: **0 180 700**
**B1**

(12) **EUROPÄISCHE PATENTSCHRIFT**

(45) Veröffentlichungstag der Patentschrift:
**21.09.88**

(51) Int. Cl.⁴: **B 60 J 3/02**

(21) Anmeldenummer: **85101782.2**

(22) Anmeldetag: **19.02.85**

(54) **Sonnenblende für Fahrzeuge.**

(30) Priorität: **09.11.84 DE 3440976**

(43) Veröffentlichungstag der Anmeldung:
**14.05.86 Patentblatt 86/20**

(45) Bekanntmachung des Hinweises auf die Patenterteilung:
**21.09.88 Patentblatt 88/38**

(84) Benannte Vertragsstaaten:
**DE FR GB IT SE**

(56) Entgegenhaltungen:
**EP-A-0 068 269**
**EP-A-0 180 699**
**DE-U-7 536 644**
**FR-A-2 394 377**
**GB-A-2 046 198**
**GB-A-2 061 210**
**GB-A-2 108 451**

(73) Patentinhaber: **Gebr. Happich GmbH, Postfach 10 02 49 Clausenbrücke 1, D-5600 Wuppertal 1 (DE)**

(72) Erfinder: **Ebert, Charles, 7, Rue du Parc, F-70300 Luxeuil (FR)**
Erfinder: **Delcroix, Jean- Louis, Res. Saint Ann App. 15 Rue Colmban, F-70300 Luxeuil (FR)**
Erfinder: **Majchrzak, Roland, 18, Route de Thionville, F-57110 Yutz (FR)**
Erfinder: **Viertel, Lothar, Jutta von Hattstein-Strasse 41, D-6636 Berus Überherrn (DE)**

## Beschreibung

Die Erfindung bezieht sich auf eine Sonnenblende für Fahrzeuge, mit einem plattenförmigen, eine etwa rechteckige Umrißkontur aufweisenden Sonnenblendenkörper, der in einem Eckbereich ein eingelagertes, als Kunststoff-Spritzgußteil ausgebildetes Lagergehäuse aufweist, welches mit einer Lagerbohrung zur Aufnahme eines Endbereichs einer Sonnenblendenachse ausgebildet ist und eine den Endbereich der Sonnenblendenachse radial spannende U-förmige Blattfeder trägt, deren Schenkel in Aussparungen der Lagerbohrungswandung angeordnet sind (Sonnenblende z. B. nach der GB-A-2 046 198).

Sonnenblendenkörper herkömmlicher Sonnenblenden, weisen im allgemeinen eine aus einem Drahtrahmen bestehende Verstärkungseinlage auf, die in einem Eckbereich mit einem Lagergehäuse verbunden ist, welches zur Aufnahme einer Sonnenblendenachse dient und eine die Sonnenblendenachse beaufschlagende Rastfeder trägt. Die Lagergehäuse werden als mit dem Drahtrahmen vernietete Blechlager oder auch als Kunststoffkörper hergestellt, die auf den Drahtrahmen aufgeklipst oder, wie es weiterhin bekannt ist, unmittelbar auf den Drahtrahmen aufgespritzt werden. Die aus Drahtrahmen und Lagerkörper bestehende Einheit ist bei Sonnenblendenkörpern herkömmlicher Art in einem außenseitig mit einer Umhüllungsfolie versehenen Polstermaterial eingebettet. Als Polstermaterial wird Schnittschaum oder Formschaum eingesetzt. Unter Schnittschaum-Polster werden Zuschnitte aus Kunststoffschaumbahnen verstanden, die beidseitig auf die Verstärkungseinlage nebst Lagergehäuse aufgelegt und durch die Umhüllungsfolie, die im allgemeinen umlaufend randverschweißt wird, zusammengehalten werden. Von Sonnenblendenkörpern aus Formschaum wird gesprochen, wenn die Verstärkungseinlage nebst Lagergehäuse in eine Schäumform eingesetzt und mit Kunststoffmaterial umschäumt wird, wobei der dadurch gebildete Schäumling im allgemeinen ebenfalls mit einer Umhüllungsfolie verkleidet wird.

Bei der Herstellung von im wesentlichen aus Formschaum bestehenden Sonnenblendenkörpern ergeben sich aber große Probleme im Lagergehäusebereich, weil es infolge des Schäumdrucks schwierig ist, das Lagergehäuse bzw. die Lagerbohrung desselben schaumfrei zu halten, zumal die Lagergehäuse herkömmlicher Bauart im Rastfederaufnahmebereich Durchbrüche zum Durchlaß der Rastfederarme aufweisen. Das bisher vorgenommene Abdichten der möglichen Schaumeindringstellen durch Klebeband oder dgl. stellt, weil es zeit- und arbeitsaufwendig und letztendlich auch nicht besonders zuverlässig ist, keine zufriedenstellende Lösung dar.

Der vorliegenden Erfindung liegt nun die Aufgabe zugrunde eine Sonnenblende der eingangs näher geschilderten Art in bezug auf das Lagergehäuse zu verbessern und das Lagergehäuse derart zu gestalten, daß beim Schäumen des Sonnenblendenkörpers ein Eindrigen von Schaummaterial in das Lagergehäuseinnere verhindert wird, wobei weiterhin angestrebt wird, eine besonders kostengünstige Lösung aufzuzeigen.

Zur Lösung dieser Aufgabe ist erfindungsgemäß vorgesehen, daß die Blattfeder innerhalb einer im Lagergehäuse ausgebildeten, durch ein Verschlußelement abgekapselten Stecköffnung angeordnet ist.

Zufolge dieser erfindungsgemäßen Maßnahmen ist bis auf die vordere Öffnungsseite der Lagerbohrung, die allerdings problemlos zu verschließen ist, eine hermetische Abkapselung der Blattfeder und des gesamten Lagergehäuseinnern erreicht. Die durch die Herstellung und Montage des Verschlußelements anfallenden Kosten sind, zumal es sich hierbei bevorzugsweise um ein Kunststoff-Spritzgußteil handelt, derart gering, daß es sich - wie hier durchgeführte Berechnungen ergaben - anbietet, das erfindungsgemäß ausgebildete Lagergehäuse als Standardteil auch für Sonnenblenden mit aus Schnittschaum bebildeten Sonnenblendenkörpern einzusetzen.

Eine vorteilhafte Ausgestaltung der Erfindung besteht darin, daß das Lagergehäuse einendig eine nur von dessen Stirnende her zugängliche, koaxial zur Lagerbohrung ausgerichtete Stecköffnung für die darin eingesetzte Feder und eine die Lagerbohrung sowie die Stecköffnung dicht verschließende Kappe als Verschlußelement aufweist.

Gemäß einer weiteren vorteilhaften Ausgestaltung der Erfindung ist vorgesehen, daß die Kappe napfförmig ausgebildet ist und an ihrer Wandung einen umlaufenden Wulst aufweist, der in eine umlaufende Nut des Lagergehäuses eingreift. Damit ist die Festlegung der Kappe am Lagergehäuse durch eine einfach Klipsverbindung verwirklicht.

Eine Weiterbildung der Erfindung kann darin bestehen, daß das kappenseitige Ende des Lagergehäuses am Umfang einen koaxial überstehenden Kragen aufweist, in dem innenseitig die für das Enschnappen der an der Kappe außenseitig vorgesehenen Wulst dienende Nut angeordnet ist. Weiterhin kann vorgesehen sein, daß zwischen dem Boden der Kappe und dem Stirnende des Lagergehäuses ein Freiraum besteht, in den der mit einer Ringnut versehene Endbereich der Sonnenblendenachse sowie ein einstückig und materialeinheitlich mit dem Lagergehäuse ausgebildeter Federarm hineinragt, der an seinem freien Ende eine in die Ringnut der Sonnenblende eingeschnappte Rastnase aufweist. Damit dient das Lagergehäuse nicht nur zur Halterung der Blattfeder und zur drehbeweglichen Aufnahme der Sonnenblendenachse sondern darüber hinaus auch dazu, die Sonnenblendenachse gegen ein axiales Verschieben zu sichern. Alternativ kann der mit einer Rastnase ausgebildete Federarm auch einstückig und materialeinheitlich mit der Kappe ausgebildet sein.

Eine besonders vorteilhafte Ausgestaltung der Erfindung besteht darin, daß die Kappe ein das freie Ende der Sonnenblendenachse beaufschlagendes elektrisches Kontaktelement trägt, welches mit einem Ende eines mit dem anderen Ende zu einer im Sonnenblendenkörper angeordneten Lichtquelle geführten elektrischen Leiters verbunden ist. Dabei besteht das Kontaktelement aus einem Blechstreifen, der mit einem abgewinkelten Endbereich in einer Stecköffnung der Kappe sitzt und mit einer federnden Zunge am Stirnende der Sonnenblendenachse anliegt. Auf diese Weise läßt sich ein Teil der elektrischen Verdrahtung bei mit einer Lichtquelle ausgerüsteten Sonnenblenden besonders einfach verwirklichen.

Die Erfindung kann mit Vorteil auch dadurch realisiert werden, daß die Stecköffnung und die Lagerbohrung in einer einander kreuzenden Anordnung im Lagergehäuse ausgebildet sind. In diesem Fall ist das Verschlußelement bevorzugterweise als Stopfen ausgebildet, weiterhin mit der Blattfeder verbunden und zusammen mit dieser in die Stecköffnung eingesetzt. Auch kann der Stopfen als Kunststoff-Spritzgußteil ausgebildet und in der Stecköffnung durch eine Rastverbindung gehalten sein. Schließlich kann noch vorgesehen sein, daß der Stopfen mit einer Rastnase zum Einrasten in eine am Endbereich der Sonnenblendenachse vorgesehenen Ringnut ausgebildet ist.

Die Erfindung wird hinsichtlich der Abkapselung des Lagerinneren vervollkommnet, wenn an das Lagergehäuse ein sich an den Rand der Stecköffnung anschließender, aus dem Sonnenblendenkörper herausragender, vor dem Einstecken der Lagerachse wieder entfernbarer, Rohrkörper angeformt ist.

Ausführungsbeispiele der Erfindung werden nachfolgend anhand der Zeichnung näher erläutert. Es zeigen:

Fig. 1 eine komplette Sonnenblende in Ansicht,

Fig. 2 die Versteifungseinlage und das damit verbundene Lagergehäuse der Sonnenblende nach Fig. 1,

Fig. 3 einen Schnitt durch das Lagergehäuse gemäß der Linie III - III in Fig. 4,

Fig. 4 einen Schnitt IV - IV nach Fig. 3,

Fig. 5 einen Schnitt V - V nach Fig. 3,

Fig. 6 einen Teilbereich des Lagerkörpers in einer Fig. 3 entsprechenden Schnittdarstellung jedoch ausgerüstet mit einer elektrischen Kontakteinrichtung,

Fig. 7 einen Schnitt durch den Endbereich des Lagergehäuses gemäß der Linie III - III in

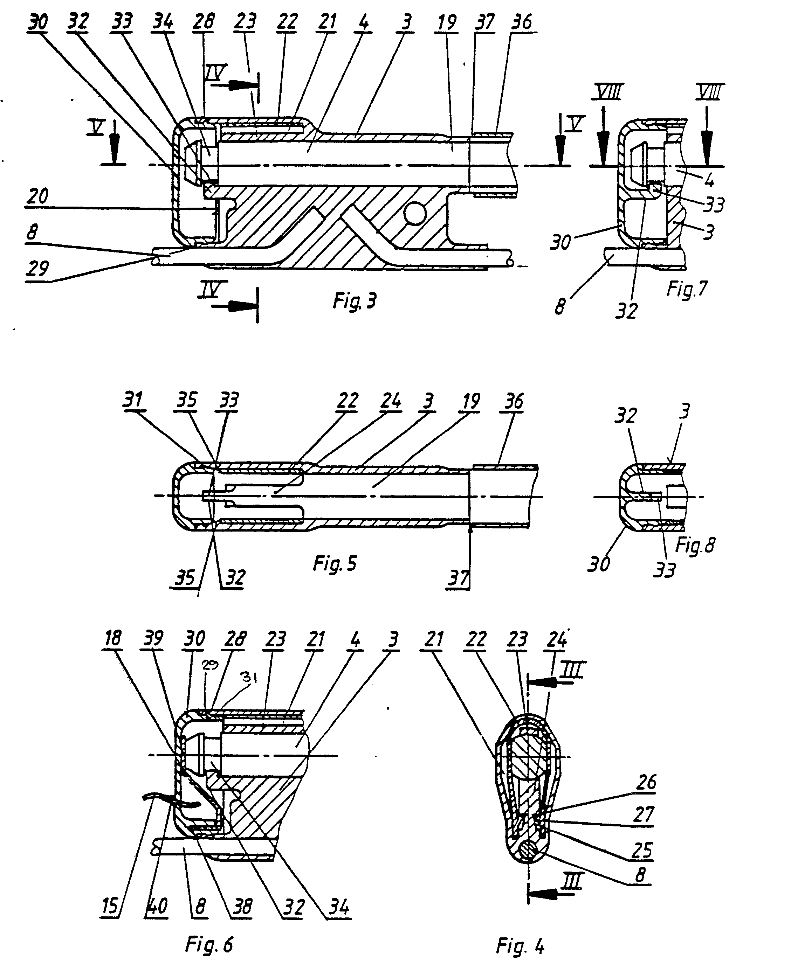

Fig. 4 in einer gegenüber Fig. 3 abgewandelten Ausführungsform,

Fig. 8 einen Schnitt VIII - VIII nach Fig. 7,

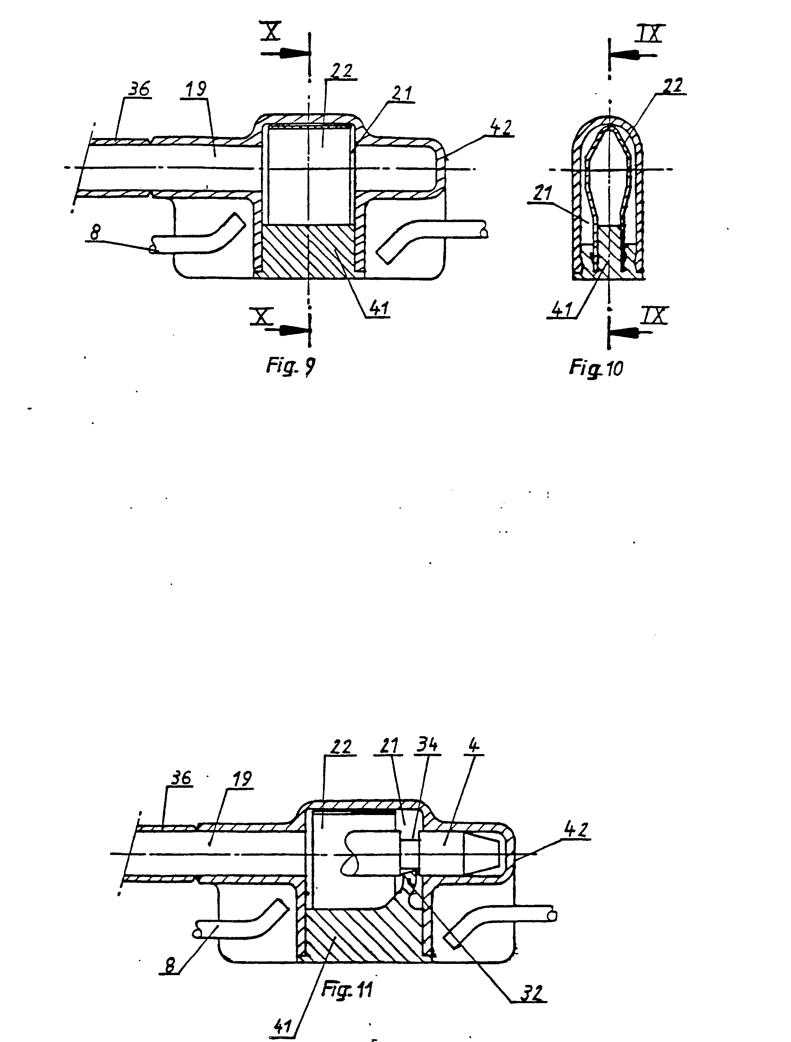

Fig. 9 ein Lagergehäuse abgewandelter Bauart im Schnitt entsprechend der Schnittlinie IX - IX in Fig. 10,

Fig. 10 einen Schnitt X - X nach Fig. 9 und

Fig. 11 ein Lagergehäuse, ähnlich dem nach Fig. 9 im Schnitt.

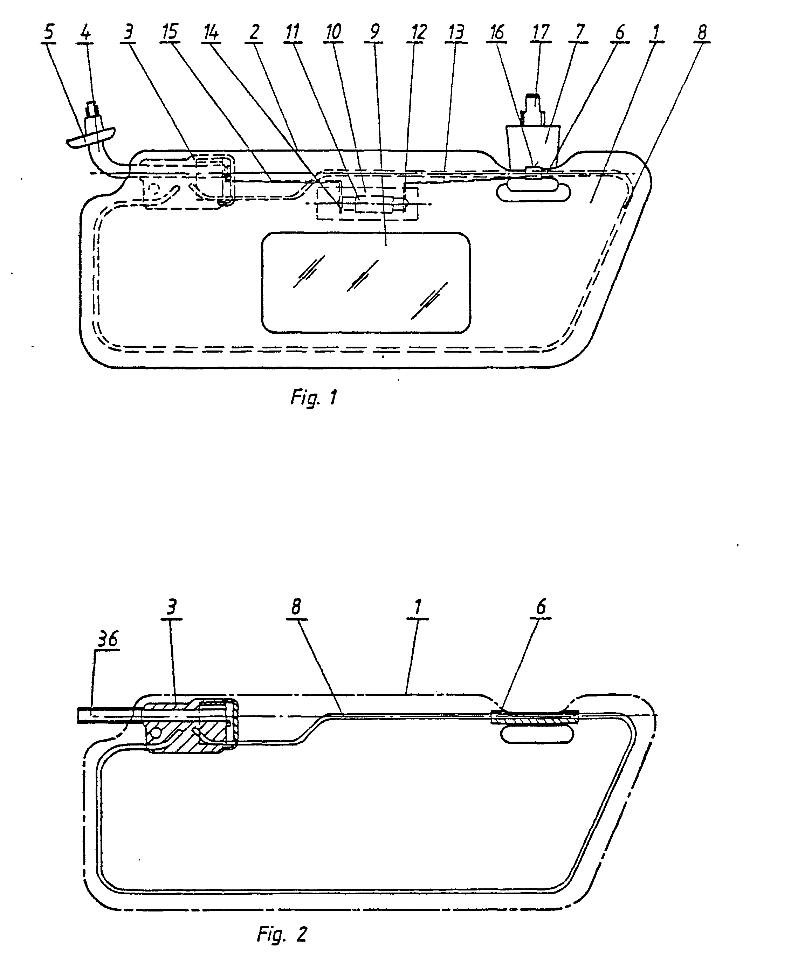

Die Sonnenblende nach Fig. 1 besteht aus einem Sonnenblendenkörper 1, an dessen oberer Längskante 2 ein Schwenklager, welches aus einem Lagergehäuse 3, einer darin eingesetzten L-förmigen Sonnenblendenachse 4 und einem den kurzen Schenkel der Sonnenblendenachse 4 aufnehmenden, an der Fahrzeugkarosserie zu befestigenden Lagerbock 5 besteht, an einem Endbereich angeordnet ist. Am anderen Endbereich derselben Längskante 2 sitzt ein aus Gegenlagerachse 6 und Gegenlagergehäuse 7 bestehendes Gegenlager, von dem das Gegenlagergehäuse 7 an der Fahrzeugkarosserie befestigbar ist. Das Lagergehäuse 3 ist mit einem eine Verstärkungseinlage 8 für den Sonnenblendenkörper 1 bildenden Drahtrahmen verbunden, wobei das Lagergehäuse 3 als Kunststoff-Spritzgußteil ausgebildet und vorzugsweise unmittelbar an den Drahtrahmen angespritzt ist (Fig. 2). Auf der im herabgeklappten Zustand der Sonnenblende dem Fahrgastraum des Fahrzeugs zugewandten Hauptfläche des Sonnenblendenkörpers 1 ist ein Spiegel 9 angeordnet, dem eine unter einer lichtdurchlässigen Abdeckung 10 sitzende, z.B. als Soffittenlampe 11 ausgebildete Lichtquelle zugeordnet ist.

Zur elektrischen Stromversorgung der Soffittenlampe 11 ist an den einen Lampenkontakt 12 ein Stromzuführungsleiter 13 und an den anderen Lampenkontakt 14 ein Masseleiter 15 angeschlossen. Der Stromzuführungsleiter 13 ist anderendig mit einem auf der Gegenlagerachse 6 sitzenden elektrischen Kontakt 16 verbunden, welcher mit einem im Gegenlagergehäuse 7 befindlichen Gegenkontakt, von dem lediglich die an einen elektrischen Leiter der Fahrzeugelektrik anschließbare Kontaktfahne 17 gezeigt ist, kontaktiert. Der Masseleiter 15 ist an einem in Fig. 6 deutlich dargestellten Kontaktelement 18 angeschlossen, welches mit der Sonnenblendenachse 4 kontaktiert.

Die Fig. 3 und 5 zeigen eine erste Ausführungsform des Lagergehäuses 3 und Fig. 6 zeigt eine Abwandlung bzw. Vervollkommnung desselben. Das Lagergehäuse 3 besteht aus einem blockförmigen Kunststoff-Spritzgußteil, welches durch unmittelbares Aufspritzen unlösbar mit der Verstärkungseinlage 8 verbunden ist. Das Lagergehäuse 3 weist im oberen Bereich eine durchlaufende Lagerbohrung 19 zur drehbeweglichen Aufnahme des langen Schenkels der Sonnenblendenachse 4 auf. An dem in Einsteckrichtung der Sonnenblendenachse 4 gesehen hinteren Stirnende 20 ist das Lagergehäuse 3 mit einer nur vom Stirnende 20 her zugänglichen Stecköffnung 21 ausgebildet, die zur Aufnahme einer U-förmig gebogenen Blattfeder 22 dient. Die Stecköffnung 21 geht im Bereich der Blattfederschenkel in die Lagerbohrung 19 über, so daß die Blattfederschenkel die Sonnenblendenachse 4 radial spannen können. Die Sonnenblendenachse 4 ist auch im Bereich der Blattfeder 22 im Lagergehäuse 3 geführt, und zwar durch einen oberen axial ausgerichteten Materialsteg 23 und einen unteren axial verlaufenden Materialsteg 24, deren an der Sonnenblendenachse 4 anliegenden Fläche dem Radius der Sonnenblendenachse 4 durch eine, im Querschnitt gesehen hohlrunde Ausbildung angepaßt sind. Der obere Materialsteg 23 dient zudem zum Abstützen des Steges der Blattfeder 22. Der untere Materialsteg 24 weist im unteren Bereich seitliche Aussparungen 25 auf. Die dadurch gebildeten Schultern 26 dienen zur Abstützung von aus den Schenkeln der Blattfeder 22 freigeschnittenen und nach innen herausgebogenen, hochstehenden Stützarmen 27.

Am Stirnende 20 des Lagergehäuses 3 ist umfangsseitig ein überstehender Kragen 28 angeformt, der innenseitig eine umlaufende Nut 29 aufweist. In die durch den Kragen 28 gebildete Öffnung ist die offene Seite einer napfförmigen Kappe 30 eingesteckt und arretiert, wobei die Arretierung über einen außenseitig an der Kappenwandung angeformten Wulst 31 erfolgt, der in die Nut 29 einrastet. Durch die Kappe 30 wird das hintere Ende der Lagerbohrung 19 verschlossen und die Blattfeder 22 völlig eingekapselt.

In den Raum zwischen dem Boden der Kappe 30 und dem Stirnende 20 ragt ein am Lagergehäuse 3 angeformter Federarm 32 ein, der am freien Ende eine angeformte Rastnase 33 aufweist, welche zwecks axialer Festlegung der Sonnenblendenachse 4 in eine an deren Endbereich vorgesehene Ringnut 34 einrastet.

Zur Verschiebesicherung der Blattfeder 22, die sich einendig am Grund der Stecköffnung 21 abstützt, können die Blattfeder 22 anderendig hintergreifende, am Lagergehäuse 3 angeformte Rastnasen 35 (Fig. 5) dienen. Es ist aber auch möglich, die Kappenwandung, wie in Fig. 6 gezeigt, zu verlängern, so daß sich eine Abstützung der Blattfeder 22 durch die Kappe 30 ergibt.

In Fig 3 und 5 ist noch gezeigt, daß die Lagerbohrung 19 durch einen am Lagergehäuse 3 angeformten Rohrkörper 36 verlängert ist. Die Verbindung des Lagergehäuses 3 mit dem Rohrkörper 36 erfolgt über eine dünne und relativ schwache Materialzone, die als Sollbruchstelle 37 dient. Der Rohrköper 36 dient zunächst, ebenso wie die Kappe 30, dazu, ein Eindringen von Schaummaterial in das Innere des Lagergehäuses 3 beim Umschäumen des Lagergehäuses 3 und der Verstärkungseinlage 8 zu verhindern. Die besondere Aufgabe des Rohrkörpers besteht aber weiterhin darin, die aus Lagergehäuse 3 und Verstärkungseinlage 8 bestehende Einheit lagegenau ausgerichtet in der Schäumform zu halten, indem lediglich der Rohrkörper 36 eingespannt wird. Sobald der Sonnenblendenkörper 1 fertiggestellt ist, wird der Rohrkörper 36 durch Wegbrechen von diesem entfernt.

Fig. 6 zeigt den Endbereich eines Lagergehäuses 3 mit aufgeklipster Kappe 30, die eine Stecköffnung 38 für das abgewinkelte Ende des Kontaktelements 18 aufweist. Die Stecköffnung 38 befindet sich in der Wandung der Kappe 30 und läuft am Kappenrand aus. Das Kontaktelement 18 besteht aus einem Blechstreifen mit dem in der Stecköffnung 38 sitzenden Ende und dem sich daran anschließenden Schenkel, dessen freier Endbereich durch eine zweifache Abwinklung eine am Stirnende der Sonnenblendenachse 4 anliegende Federzunge 39 bildet. Der Masseleiter 15 ist durch eine Öffnung 40 im Boden der Kappe 30 gesteckt und mit dem Kontaktelement 18 z. B. durch einen Kontaktniet elektrisch leitend verbunden. Es versteht sich von selbst, daß das Kontaktelement 18 bei Sonnenblenden ohne Beleuchtungseinrichtung entfallen kann.

Fig. 7 und 8 zeigen den Endbereich des Lagergehäuses 3 mit aufgesteckter Kappe 30 und der im Lagergehäuse 3 angeordneten Sonnenblendenachse 4. Im Gegensatz zu dem in Fig. 3 und 5 gezeigten Ausführungsbeispiel ist hier der Federarm 32 einstückig und materialeinheitlich am Boden der Kappe 30 angeformt. Auch bei dieser Ausführungsform weist der Federarm 32 am freien Endbereich eine Rastnase 33 auf, die zwecks axialer Festlegung der Sonnenblendenachse 4 in die an deren Endbereich vorgesehene Ringnut 34 einrastet.

In den Fig. 9 bis 11 ist eine zweite Ausführungsform eines Lagergehäuses 3 mit einer Lagerbohrung 19 und einer Stecköffnung 21 gezeigt, wobei der wesentlichste Unterschied gegenüber der vorbeschriebenen Ausführungsform darin besteht, daß sich die Lagerbohrung 19 und die Stecköffnung 21 in einem rechten Winkel queren. Die Stecköffnung 21 ist hier als nach unten offene Kammer ausgebildet, in der die Blattfeder 22 mit seitlichem Spiel (Fig. 10) eingesetzt ist. Die Lagerbohrung 19 durchsetzt die Stecköffnung 21, was durch Fig. 9 und 11 besonders verdeutlicht ist.

In den nach unten offenen Endbereich der Stecköffnung 21 ist ein als Verschlußelement dienender Stopfen 41 eingesetzt und in der Stecköffnung 21 klipsartig (vgl. Fig. 10) gehalten. Der Stopfen 41 trägt die Blattfeder 22. Die Blattfeder 22 kann in den Stopfen 41 eingesteckt oder eingeschaft sein. Ebensogut ist es möglich, die freien Endbereiche der Federschenkel unmittelbar zu umspritzen, um auf diese Weise eine zuverlässige Verbindung zwischen dem als Kunststoff-Spritzgußteil ausgebildeten Stopfen 41 und der Blattfeder 22 herzustellen.

Der Stopfen 41 nach Fig. 11 ist mit einem Federarm 32 einstückig ausgebildet, dessen freier Endbereich als Rastnase in eine am freien Endbereich der Sonnenblendenachse 4 vorgesehene Ringnut 34, zwecks axialer Festlegung der Sonnenblendenachse 4, einrastbar ist.

Während die Lagerbohrung 19 bei den vorbeschriebenen Ausführungsbeispielen durchlaufend ausgebildet ist, weist sie bei dem Lagergehäuse 3 gemäß Fig. 9 bis 11 ein geschlossenes Ende 42 auf.

**Patentansprüche**

1. Sonnenblende für Fahrzeuge mit einem plattenförmigen, eine etwa rechteckige Umrißkontur aufweisenden Sonnenblendenkörper (1), der in einem Eckbereich ein eingelagertes, als Kunststoff-Spritzgußteil ausgebildetes Lagergehäuse (3) aufweist, welches mit einer Lagerbohrung (19) zur Aufnahme eines Endbereichs einer Sonnenblendenachse (4) ausgebildet ist und eine den Endbereich der Sonnenblendenachse (4) radial spannende U-förmige Blattfeder (22) trägt, deren Schenkel in Aussparungen der Lagerbohrungswandung angeordnet sind, dadurch gekennzeichnet, daß die Blattfeder (22) innerhalb einer im Lagergehäuse (3) ausgebildeten, durch ein Verschlußelement (Kappe 30, Stopfen 41) abgekapselten Stecköffnung (21) angeordnet ist.

2. Sonnenblende nach Anspruch 1, dadurch gekennzeichnet, daß das Lagergehäuse (3) einendig eine nur von dessen Stirnende her zugängliche, koaxial zur Lagerbohrung (19) ausgerichtete Stecköffnung (21) für die darin eingesetzte Blattfeder (22) und eine die Lagerbohrung (19) sowie die Stecköffnung (21) dicht verschließende Kappe (30) als Verschlußelement aufweist.

3. Sonnenblende nach Anspruch 1 oder 2, dadurch gekennzeichnet, daß die Kappe (30) napfförmig ausgebildet ist und an ihrer Wandung einen umlaufenden Wulst (31) aufweist, der in eine umlaufende Nut (29) des Lagergehäuses (3) eingreift.

4. Sonnenblende nach einem der Ansprüche 2 oder 3, dadurch gekennzeichnet, daß das kappenseitige Ende des Lagergehäuses (3) am Umfang einen koaxial überstehenden Kragen (28) aufweist, in dem innenseitig die für das Einschnappen der an der Kappe (30) außenseitig vorgesehenen Wulst (31) dienende Nut (29) angeordnet ist.

5. Sonnenblende nach einem der Ansprüche 2 bis 4, dadurch gekennzeichnet, daß zwischen dem Boden der Kappe (30) und dem Stirnende (20) des Lagergehäuses (3) ein Freiraum besteht, in den der mit einer Ringnut (34) versehene Endbereich der Sonnenblendenachse (4) sowie ein enstückig und materialeinheitlich mit dem Lagergehäuse (3) ausgebildeter Federarm (32) hineinragt, der an seinem freien Ende eine in die Ringnut (34) der Sonnenblendenachse (4) eingeschnappte Rastnase (33) aufweist.

6. Sonnenblende nach einem der Ansprüche 2 bis 4, dadurch gekennzeichnet, daß zwischen dem Boden der Kappe (30) und dem Stirnende (20) des Lagergehäuses (3) ein Freiraum besteht, in den der mit einer Ringnut (34) versehene Endbereich der Sonnenblendenachse (4) sowie ein einstückig und materialeinheitlich mit der Kappe (30) ausgebildeter Federarm (32) hineinragt, der an seinem freien Ende eine in die Ringnut (34) der Sonnenblendenachse (4) eingeschnappte Rastnase (33) aufweist.

7. Sonnenblende nach einem der Ansprüche 2 bis 6, dadurch gekennzeichnet, daß die Kappe (30) ein das freie Ende der Sonnenblendenachse (4) beaufschlagendes elektrisches Kontaktelement (18) trägt, welches mit einem Ende eines mit dem anderen Ende zu einer im Sonnenblendenkörper (1) angeordneten Lichtquelle (11) geführten elektrischen Leiters (15) verbunden ist.

8. Sonnenblende nach Anspruch 7, dadurch gekennzeichnet, daß das Kontaktelement (18) aus einem Blechstreifen besteht, der mit einem abgewinkelten Endbereich in einer Stecköffnung (38) der Kappe (30) sitzt und mit einer federnden Zunge (39) am Stirnende der Sonnenblendenachse (4) anliegt.

9. Sonnenblende nach Anspruch 1, dadurch gekennzeichnet, daß die Stecköffnung (21) und die Lagerbohrung (19) in einer einander kreuzenden Anordnung im Lagergehäuse (3) ausgebildet sind.

10. Sonnenblende nach Anspruch 1 oder 9, dadurch gekennzeichnet, daß das Verschlußelement als Stopfen (41) ausgebildet ist.

11. Sonnenblende nach dem Anspruch 10, dadurch gekennzeichnet, daß der Stopfen (41) mit der Blattfeder (22) verbunden und zusammen mit dieser in die Stecköffnung (21) eingesetzt ist.

12. Sonnenblende nach einem der Ansprüche 10 oder 11, dadurch gekennzeichnet, daß der Stopfen (41) als Kunststoff-Spritzgußteil ausgebildet und in der Stecköffnung (21) durch eine Rastverbindung gehalten ist.

13. Sonnenblende nach einem der Ansprüche 10 bis 12, dadurch gekennzeichnet, daß der Stopfen (41) mit einer Rastnase (32) zum Einrasten in eine am Endbereich der Sonnenblendenachse (4) vorgesehene Ringnut (34) ausgebildet ist.

14. Sonnenblende nach einem der Ansprüche 1 bis 13, dadurch gekennzeichnet, daß an das Lagergehäuse (3) ein sich an den Rand der Stecköffnung (19) anschließender, aus dem Sonnenblendenkörper (1) herausragender, vor dem Einstecken der Lagerachse (4) wieder entfernbarer, Rohrkörper (36) angeformt ist.

## Claims

1. A sun visor for vehicles, comprising a plate-shaped body (1) having an approximately rectangular contour and, in a corner region, comprising an embedded bearing housing (3) in the form of a plastics injection-moulded part formed with a bore (19) for receiving an end region of a sun-visor pivot shaft (4) and bearing a U-shaped leaf spring (22) radially clamping the end region of the pivot shaft (4), the legs of the spring being disposed in recesses in the wall of the bore, characterised in that the leaf spring (22) is disposed inside an insertion opening (21) formed in the bearing casing (3) and enclosed by a closure element (cap 30, plug 41).

2. A sun visor according to claim 1, characterised in that the bearing casing (3) at one end has an insertion opening (21) accessible only from its end face and aligned coaxially to the bore (19) and receiving the leaf spring (22) when inserted therein, and a closure element in the form of a cap (30) which tightly closes the bore (19) and the opening (21).

3. A sun visor according to claim 1 or 2, characterised in that the cap (30) is cup-shaped and on its wall has a peripheral bead (31) which engages in a peripheral groove (29) in the bearing casing.

4. A sun visor according to claim 2 or 3, characterised in that the cap end of the bearing casing (3) has a peripherally coaxially projecting collar (28) containing the groove (29) for snapping into the bead (31) provided on the outside of the cap (30).

5. A sun visor according to any of claims 2 to 4, characterised in that a space is left between the base of the cap (30) and the end face (20) of the bearing housing (3), and an end region of the pivot shaft (4) formed with an annular groove (34) projects into the space and so does a spring arm (32) formed integrally with and of the same material as the bearing casing (3) and provided at its free end with a catch or lug (33) which snaps into the annular groove (34) of the pivot shaft (4).

6. A sun visor according to any of claims 2 to 4, characterised in that a space is left between the base of the cap (30) and the end face (20) of the bearing housing (3), and an end region of the pivot shaft (4) formed with an annular groove (34) projects into the space and so does a spring arm (32) formed integrally with and of the same material as the cap (30) and provided at its free end with a catch or lug (33) which snaps into the annular groove (34) of the pivot shaft (4).

7. A sun visor according to any of claims 2 to 6, characterised in that the cap (30) bears an electric contact element (18) acting upon the free end of the pivot shaft (4) and connected at one end to an electric conductor (15), the other end of which is guided to a light source (11) disposed in the sun-visor body (1).

8. A sun visor according to claim 7, characterised in that the contact element (18) comprises a sheet-metal strip having a bent end region which fits into an insertion opening (38) in the cap (30) and has a spring tongue (39) which abuts the end face of the pivot shaft (4).

9. A sun visor according to claim 1, characterised in that the insertion opening (21) and the bore (19) are formed in the bearing casing (3) so that they cross one another.

10. A sun visor according to claim 1 or 9, characterised in that the closure element is a plug (41).

11. A sun visor according to claim 10, characterised in that the plug (41) is connected to the leaf spring (22) and is inserted therewith into the opening (21).

12. A sun visor according to claim 10 or 11, characterised in that the plug (41) is a plastics injection-moulded part and is held in the opening (21) by a catch connection.

13. A sun visor according to any of claims 10 to 12, characterised in that the plug (41) is formed with a catch or lug (32) for engaging in an annular groove (34) formed at the end region of the pivot shaft.

14. A sun visor according to any of claims 1 to 13, characterised in that a tubular member (36) adjacent the edge of the insertion opening (19), projecting from the sun visor body (1) and removable before inserting the bearing shaft (4) is integrally formed on the bearing casing (3).

## Revendications

1. Pare-soleil pour véhicules, comprenant un corps (1) en forme de plaque présentant un contour sensiblement rectangulaire, qui comporte dans une région d'angle un boîtier pour palier (3) incorporé constitué sous forme d'un élément en matière plastique moulée par injection, muni d'un alésage de palier (19) pour recevoir une partie d'extrémité d'un axe (4) de pare-soleil et supportant un ressort à lame (22) en U qui soumet la région d'extrémité de l'axe (4) du pare-soleil à une contrainte radiale, dont les branches sont disposées dans des évidements de la paroi de l'alésage de palier, caractérisé en ce que le ressort à lame (22) est disposé à l'intérieur d'une ouverture de réception (21) constituée dans le boîtier de palier (3) et fermée par un élément de fermeture (capuchon 30, bouchon 41).

2. Pare-soleil selon la revendication 1, caractérisé en ce que le boîtier de palier (3) présente à une extrémité une ouverture de réception (21) qui n'est accessible que par son extrémité frontale, et qui est orientée coaxialement à l'alésage de palier (19) et qui est destinée au ressort à lame (22) que l'on introduit à l'intérieur, ainsi qu'un capuchon (30) constituant l'élément de fermeture et fermant de façon étanche l'alésage de palier (19) ainsi que l'ouverture de réception (21).

3. Pare-soleil selon la revendication 1 ou 2, caractérisé en ce que le capuchon (30) est constituée sous la forme d'une cuvette et présente dans sa paroi un bourrelet périphérique (31) qui pénètre dans une rainure périphérique (29) du boîtier de palier (3).

4. Pare-soleil selon l'une quelconque des revendications 2 ou 3, caractérisé en ce que l'extrémité du boîtier de palier (3) qui est située du côté du capuchon comprend sur sa périphérie une collerette (28) coaxiale en saillie dans laquelle est prévue une rainure intérieure (29) servant à l'introduction par enclenchement du bourrelet (31) prévu sur le côté externe du capuchon (30).

5. Pare-soleil selon l'une quelconque des revendications 2 à 4, caractérisé en ce qu'il est prévu un espace libre entre le fond du capuchon (30) et l'extrémité frontale (20) du boîtier de palier (3), dans lequel pénètre une région d'extrémité de l'axe (4) du pare-soleil qui est muni d'une rainure annulaire (34), ainsi qu'un bras élastique (32) constitué d'un seul tenant avec le boîtier de palier (3) et formé du même matériau, qui présente à son extrémité libre une saillie d'enclenchement (33) qui s'introduit élastiquement dans la rainure annulaire (34) de l'axe (4) du pare-soleil.

6. Pare-soleil selon l'une quelconque des revendications 2 à 4, caractérisé en ce qu'il est prévu un espace libre entre le fond du capuchon (30) et l'extrémité frontale (20) du boîtier de palier (3), dans lequel pénètre une région d'extrémité de l'axe (4) du pare-soleil qui est muni d'une rainure annulaire (34), ainsi qu'un bras élastique (32) constitué d'un seul tenant avec le capuchon (30) et formé du même matériau, qui présente à son extrémité libre une saillie d'enclenchement (33) qui s'introduit élastiquement dans la rainure annulaire (34) de l'axe (4) du pare-soleil.

7. Pare-soleil selon l'une quelconque des revendications 2 à 6, caractérisé en ce que le capuchon (30) supporte un élément de contact électrique (18) qui coopère avec l'extrémité libre de l'axe (4) du pare-soleil, et qui est relié à une extrémité d'un conducteur électrique (15) dont l'autre extrémité est reliée à une source de lumière (11) montée dans le corps (1) du pare-soleil.

8. Pare-soleil selon la revendication 7, caractérisé en ce que l'élément de contact (18) est constitué par une bande de tôle disposée par une région d'extrémité coudée dans une ouverture de réception (38) du capuchon (30) et qui repose par une languette élastique (39) contre le côté frontal du l'axe (4) du pare-soleil.

9. Pare-soleil selon la revendication 1, caractérisé en ce que l'ouverture de réception (21) et l'alésage de palier (19) sont formés dans un boîtier de palier (3) selon un agencement où ils se croisent mutuellement.

10. Pare-soleil selon la revendication 1 ou 9, caractérisé en ce que l'élément de fermeture est constitué sous forme d'un bouchon (41).

11. Pare-soleil selon la revendication 10, caractérisé en ce que le bouchon (41) est relié au ressort à lame (22) et est enfoncé avec lui dans l'ouverture de réception (21).

12. Pare-soleil selon l'une quelconque des revendications 10 ou 11, caractérisé en ce que le bouchon (41) est réalisé sous forme d'un élément en matière plastique moulée par injection et est maintenu dans l'ouverture de réception (21) par une liaison à enclenchement.

13. Pare-soleil selon l'une quelconque des revendications 10 à 12, caractérisé en ce que le bouchon (41) comprend une saillie d'enclenchement (32) destinée à être enclenchée dans une rainure annulaire (34) prévue dans la région d'extrémité de l'axe (4) du pare-soleil.

14. Pare-soleil selon l'une quelconque des revendications 1 à 13, caractérisé en ce qu'un corps tubulaire (36) se raccordant au bord de l'ouverture de réception (19), faisant saillie hors du corps (1) du pare-soleil et pouvant être enlevé avant l'enfoncement de l'axe (4) du palier, est formé sur le boîtier de palier (3).

Fig. 1

Fig. 2

Fig. 3

Fig.7

Fig. 5

Fig.8

Fig. 6

Fig. 4

0 180 700

Fig. 9

Fig. 10

Fig. 11